# EUROPÄISCHE PATENTSCHRIFT

(11) **EP 1 350 674 B1**
(45) Veröffentlichungstag und Bekanntmachung des Hinweises auf die Patenterteilung: **11.01.2006**
(21) Anmeldenummer: 03003949.9
(22) Anmeldetag: 22.02.2003
(51) Int. Cl.: B60R 7/04

(54) **Mittelkonsole für ein Kraftfahrzeug**
Central console for a motor vehicle
Console centrale pour un véhicule à moteur

(30) Priorität: 01.03.2002 DE 10208886
(43) Veröffentlichungstag der Anmeldung: 08.10.2003
(73) Patentinhaber: ADAM OPEL AG, 65423 Rüsselsheim (DE)
(72) Erfinder: Arndt, Stefan, 65193 Wiesbaden (DE); Gimbel, Hans-Peter, 65468 Trebur (DE); Verschoore, Marten, 71134 Aidlingen (DE)

(56) Entgegenhaltungen:
- WO-A-01/81118
- DE-A- 10 027 373
- DE-A- 19 742 408
- DE-A- 19 908 909
- US-A- 5 899 544
- US-A- 6 135 529
- US-B1- 6 203 088
- "console centrale sur rails" REVUE AUTOMOBILE, Bd. 2392, Nr. 82, 11. Dezember 1987 (1987-12-11), Seite 21 XP002127877 Berne,Suisse ISSN: 0018-9448

## Beschreibung

Die Erfindung bezieht sich auf eine Mittelkonsole für ein Kraftfahrzeug nach dem Oberbegriff des Patentanspruches 1.

Eine derartige Mittelkonsole ist in der DE 199 08 909 C2 beschrieben. Innerhalb eines Ablageraumes befindet sich ein auf Schienen verfahrbarer Container in Form einer Schale. Der Ablageraum selbst ist mit einem ebenfalls auf Schienen verfahrbaren Deckel geschlossen. Die Schale kann mit dem Deckel verbunden werden. Wenn keine Verbindung besteht, so wird durch Verschieben des Deckels der Zugriff zum Container geöffnet. Sobald eine Verbindung hergestellt worden ist, wird der Container zusammen mit dem Deckel verschoben, so dass ein Zugriff in den Ablageraum besteht. Nachteilig bei dieser Anordnung ist, dass zunächst der Deckel des Ablageraumes mit dem Container verbunden werden muss, um eine Zugriffsmöglichkeit zum Ablageraum zu erhalten. Des Weiteren ist diese Anordnung lediglich auf einen einzigen Container beschränkt.

Eine weitere derartige Mittelkonsole für ein Kraftfahrzeug ist aus der WO-A-01 81118 bekannt, die zwei oberhalb eines Ablageraumes auf Schienen verfahrbaren Container aufweist. Der darunter befindliche Ablageraum ist in Form einer Halbschale ausgebildet und auf den Boden zwischen den Sitzen der ersten Reihe aufgestellt. Die Stützen für die Schienen für die verfahrbaren Container werden bei dieser Lösung durch die Wände der Halbschale gebildet, wodurch diese aus einem stabilen Material gefertigt werden müssen.

Bei der aus der US-A-6 203 088 bekannten Mittelkonsole sind ebenfalls mehrere auf Schienen verfahrbare Container vorgesehen, die oberhalb eines Mitteltunnels des Kraftfahrzeuges angeordnet sind. Die mit dem Mitteltunnel verbundenen Stützen für die Schienen weisen dabei eine Form auf, die keine Anordnung eines von oben zugänglichen Ablageraumes unterhalb der Container zulässt.

Die Erfindung beruht somit auf dem Problem, eine vielseitig und einfach zu handhabende Mittelkonsole mit Containern zu schaffen, die eine Vielzahl von Staumöglichkeiten bietet, individuell konfigurierbar ist und sich in einfacher Weise realisieren lässt.

Die Erfindung sieht dazu eine Mittelkonsole gemäß dem Oberbegriff des Anspruchs 1 vor mit den weiteren Merkmalen, dass die Stützen aus mehreren, sich quer zum Schienenweg erstreckenden M-förmigen Bügeln mit je zwei oberen Auflagen bestehen, auf denen die Schienen aufliegend befestigt sind.

Durch die Möglichkeit, mehrere Container anzuordnen, lässt sich die Mittelkonsole individuell gestalten. Der Raum unter den Containern geht dabei nicht verloren, vielmehr kann er auf der gesamten Länge des Schienenweges genutzt werden, wobei der Zugriff zu den einzelnen Bereichen durch Verschieben der Container ermöglicht wird. Der Schienenweg ist dazu etwa um eine Containerlänge länger als die Gesamtlänge aller auf dem Schienenweg sich befindenden Container, so dass diese stets so verschoben werden können, damit ein zugriffsbereich in der Länge eines Containers frei wird. Gegebenenfalls muss - um dies zu erreichen - ein Container entfernt werden.

Der Raum zwischen den Stützen kann in zweierlei Weise genutzt werden. Einerseits befinden sich die Kufen bzw. Rollen, mit denen die Container auf den Schienen laufen, im oberen Bereich der Container, so dass der Boden eines von den Schienen geführten Containers unterhalb der Schienen liegt. Dies hat zur Folge, dass der Stauraum zumindest zum Teil von den Containern selbst in Anspruch genommen ist. Diese Ausführung ist angebracht, wenn die Mittelkonsole nicht sehr weit aufragen soll.

Soll andererseits der Container möglichst weit aufragen, um gegebenenfalls als Armlehne dienen zu können, kann der Boden eines von den Schienen geführten Containers auf Höhe der Schienen liegen, so dass der Raum zwischen den Stützen vollständig als Ablage dienen kann.

Erfindungsgemäß sind die Stützen aus mehreren, sich quer zum Schienenweg erstreckenden M-förmigen Bügeln mit je zwei oberen Auflagen gebildet, auf denen die Schienen aufliegend befestigt sind. Hierbei ist der Materialaufwand gering, da die Stützen nicht durchgehend ausgeführt sind.

Unterhalb des Bügels können dabei Luftleitkanäle angeordnet sein, die Warm- bzw. Kaltluft von dem Gebläse im Frontbereich des Fahrzeuges in den Fondbereich leiten. Diese bilden gleichzeitig den Stauraum seitlich begrenzende Wände.

Um die Container in verschiedenen Positionen entlang des Schienenweges zu arretieren, können die Schienen mit Rastlöchern und die Container mit den dazugehörigen Riegeln versehen sein. Auf diese Weise lässt sich eine diskontinuierliche Positionierung erreichen.

Um eine kontinuierliche Verstellbarkeit zu erzielen, kann auch vorgesehen werden, dass die Schienen jeweils mit einer Klemmleiste versehen sind und der Container mit mindestens einem Klemmstück je Klemmleiste versehen ist.

Sowohl bei der kontinuierlichen als auch bei der diskontinuierlichen Ausführung können die jeweiligen Betätigungselemente zum Lösen der Riegel bzw. des Klemmstückes in einer Mulde an der Oberseite des Containers angeordnet und damit leicht zugänglich sein.

Vorzugsweise werden die Stützen an der Oberseite des einen Mitteltunnel des Kraftfahrzeuges formenden Bodenbleches befestigt.

Um eine möglichst große Anzahl von Containern unterbringen zu können, wird vorgeschlagen, dass für ein Kraftfahrzeug mit zwei Sitzreihen in seiner Fahrgastzelle die Mittelkonsole, d.h. insbesondere der Schienenweg so ausgeführt ist, dass er sich durch die Fahrgastzelle erstreckt und zwischen den Sitzen der beiden Sitzreihen verläuft.

Zur Erläuterung des Erfindungsgedankens wird im Folgenden anhand von mehreren Ausführungsbeispielen die Erfindung näher erläutert. Dazu zeigen
- Fig. 1: die Ansicht einer Ausführungsform einer Mittelkonsole,
- Fig. 2: einen Schnitt durch Figur 1 entlang der Linie II - II.

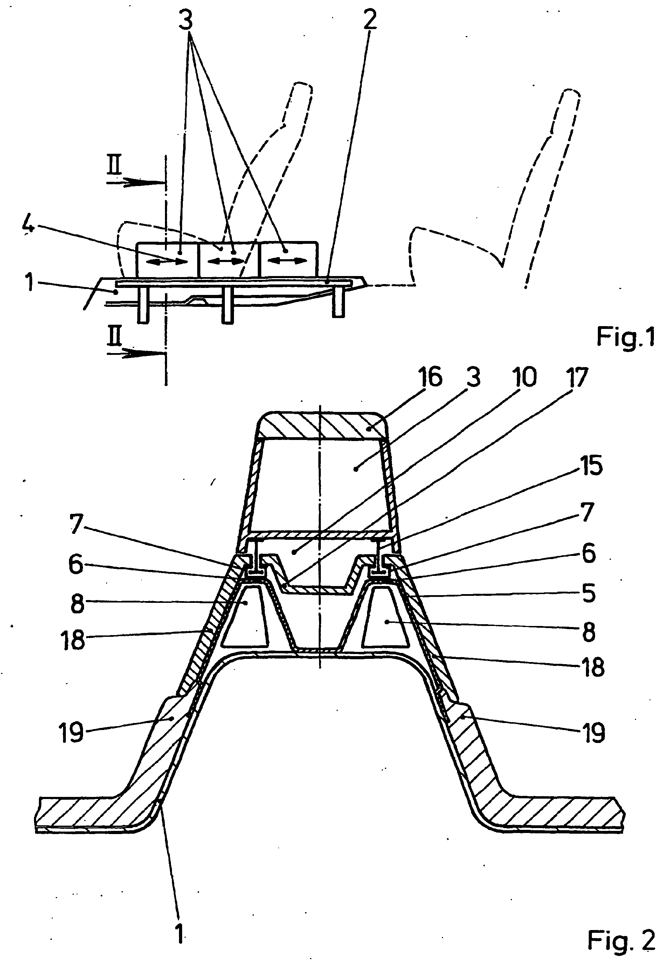

Zunächst wird auf die Figur 1 Bezug genommen, diese zeigt den Innenraum eines ansonsten nicht näher dargestellten Kraftfahrzeuges mit einem Mitteltunnel 1, auf dem in Längsrichtung des Kraftfahrzeuges in noch näher zu beschreibender Weise zwei parallel verlaufende Schienen 2 befestigt sind. Auf dem so gebildeten Schienenweg befinden sich drei Container 3, die - was die Doppelpfeile 4 andeuten sollen - vor und zurück verschiebbar sind und in geeigneter Weise in der jeweils erreichten Position arretiert werden können. Die Container 3 können verschiedene Funktionen erfüllen. Sie dienen der Aufnahme von Utensilien, die der Fahrer benötigt, wie Kartenmaterial, Taschenlampen oder dgl. Sie können aber auch mit Fächern versehen sein zur Aufnahme von CDs und Kassetten. Außerdem soll der Begriff Container auch einfache plattenartige Gebilde mit Durchbrüchen zur Aufnahme von Getränkedosen und dgl. umfassen.

Falls die Container 3 mit Deckeln versehen sind, können diese gepolstert sein, so dass die Container 3 in der entsprechenden Position als Armlehne dienen. Entscheidend ist, dass sie auf dem Schienenweg verfahrbar sind und somit hinsichtlich ihrer Lage den persönlichen Bedürfnissen des Fahrers bzw. der Mitfahrer angepasst werden können.

Der konkrete Aufbau ergibt sich aus der Figur 2. Diese zeigt die Anordnung im Querschnitt. Auf dem Mitteltunnel 1 sind in Abständen mehrere M-förmige Bügel 5 befestigt. Diese haben Auflagen 6 an den Spitzen des M, an denen nach oben hin offene, C-förmige Schienen 7 befestigt sind. Die Bügel 5 sind zum einen mittig auf dem Mitteltunnel 1 und andererseits mit ihren Flanken an den Seitenwänden des Mitteltunnels 1 befestigt. In jedem nach unten offenen Bogen des M befindet sich ein Luftleitkanal 8, dessen Außenkontur zumindest teilweise der Innenkontur des Bügels 5 entspricht, so dass diese die Luftleitkanäle 8 am Mitteltunnel 1 fixieren. Der Bereich zwischen den beiden Bögen des Bügels 5 dient als Stauraum 10, der von oben zugänglich ist. Um einen bestimmten Teilbereich des Stauraumes 10 zu erreichen, müssen die Container 3 entsprechend verschoben werden.

An der Unterseite der Container 3 befinden sich T-förmige Kufen 15. Einige der Container 3 sind mit einem Deckel 16 verschlossen, der gepolstert ist und somit als Armlehne dienen kann.

In den Stauraum 10 kann noch eine Ablageschale 17 eingehängt werden. Diese kann sich über die gesamte Länge des Schienenweges erstrecken, auch nur in Teilbereich vorgesehen sein.

Wie üblich, werden die Seitenwände des Mitteltunnels 1 durch eine Verlängerung des auf dem Fahrzeugboden liegenden Teppichbodens 19 abgedeckt. Eine weitere an den seitlichen Flanken der Bügel 5 befestigte Abdeckung 18 befindet sich zu beiden Seiten des Schienenweges.

### Bezugszeichenliste

- 1: Mitteltunnel
- 2: Schienen
- 3: Container
- 4: Doppelpfeil
- 5: Bügel

- 6: Auflage
- 7: C-förmige Schiene
- 8: Luftleitkanal
- 10: Stauraum

- 15: Kufen
- 16: Deckel
- 17: Ablageschale
- 18: Abdeckung
- 19: Teppichboden

## Patentansprüche

1. Mittelkonsole (1) für ein Kraftfahrzeug mit einem von einem Schienenpaar gebildeten Schienenweg aus zwei parallel zueinander, in Längsrichtung des Kraftfahrzeuges und in Abstand zueinander verlaufenden Schienen (2) auf Stützen mit einem entlang des Schienenweges versetzbaren Container (3), wobei ein Teilbereich des Raumes zwischen den Stützen, der in etwa die Länge des Containers aufweist, nach Versetzen des Containers (3) nach oben hin offen ist und als Stauraum (10) nutzbar ist, wobei die Schienen (2) eine Länge aufweisen, so dass sie zur Aufnahme von mindestens einem weiteren Container (3) geeignet sind, wobei mindestens zwei Container (3) unabhängig voneinander entlang des Schienenweges versetzbar sind und wobei der Raum zwischen den Stützen über den gesamten, für die Container vorgesehenen Verstellweg als Stauraum (10) nutzbar ist, der je nach Position der Container (3) auf dem Schienenweg in Teilbereichen von oben zugänglich ist, **dadurch gekennzeichnet, dass** die Stützen aus mehreren, sich quer zum Schienenweg erstreckenden M-förmigen Bügeln (5) mit je zwei oberen Auflagen (6) bestehen, auf denen die Schienen (2,7) aufliegend befestigt sind.

2. Mittelkonsole nach Anspruch 1, **dadurch gekennzeichnet, dass** der Boden eines von den Schienen (2) geführten Containers (3) unterhalb der Schienen (2) liegt und somit der Stauraum (10) zum Teil von dem Container (3) in Anspruch genommen ist.

3. Mittelkonsole nach Anspruch 1, **dadurch gekennzeichnet, dass** der Boden eines von den Schienen (2) geführten Containers (3) auf Höhe der Schienen (2) liegt und der unter dem Container (3) befindliche nutzbare Stauraum (10) als Ablage dient.

4. Mittelkonsole nach einem der vorherigen Ansprüche, **dadurch gekennzeichnet, dass** unterhalb der Schienen (2) Luf t-leitkanäle (8) angeordnet sind.

5. Mittelkonsole nach einem der vorhergehenden Ansprüche, **dadurch gekennzeichnet, dass** die Stützen an der Oberseite des den Mitteltunnel (1) des Kraftfahrzeuges formenden Bodenbleches befestigt sind.

6. Mittelkonsole nach einem der vorhergehenden Ansprüche, **dadurch gekennzeichnet, dass** sie für ein Kraftfahrzeug mit zwei Sitzreihen in seiner Fahrgastzelle vorgesehen ist, wobei sie sich durch die Fahrgastzelle erstreckt und zwischen den Sitzen der beiden Sitzreihen verläuft.

## Claims

1. A centre console (1) for a motor vehicle comprising a rail track that is formed by a pair of rails and consists of two mutually parallel rails (2) which extend in mutually spaced manner in the longitudinal direction of the motor vehicle on supports and including a container (3) that is displaceable along the rail track, wherein a sub-region of the space between the supports that is approximately as long as the length of the container is upwardly open and is usable as a storage space (10) after the container (3) has been displaced, wherein the length of the rails (2) is such that they are capable of accommodating at least one further container (3), wherein at least two containers (3) are displaceable mutually independently along the rail track and wherein the space between the supports is usable as a storage space (10) over the entire length of the displacement path provided for the containers (3) and subregions of said space are accessible from above in dependence on the position of the containers (3) on the rail track, **characterized in that** the supports consist of a plurality of M-shaped stirrups (5) which extend transversely with respect to the rail track and each of which has two upper seatings (6) on which the rails (2, 7) are laid and to which they are fastened.

2. A centre console in accordance with Claim 1, **characterized in that** the base of a container (3) guided by the rails (2) is located below the rails (2) and hence the storage space (10) is partially taken up by the container (3).

3. A centre console in accordance with Claim 1, **characterized in that** the base of a container (3) guided by the rails (2) is located at the height of the rails (2) and the usable storage space (10) located below the container (3) serves as a storage compartment.

4. A centre console in accordance with any of the preceding Claims, **characterized in that** air guidance channels (8) are arranged below the rails (2).

5. A centre console in accordance with any of the preceding Claims, **characterized in that** the supports are fastened to the upper surface of the floor pan forming the central transmission tunnel (1) of the motor vehicle.

6. A centre console in accordance with any of the preceding Claims, **characterized in that** it is provided for a motor vehicle having two rows of seats in its passenger compartment, wherein it extends through the passenger compartment and runs between the seats in the two rows of seats.

## Revendications

1. Console centrale (1) pour un véhicule automobile avec une voie comprenant une paire de rails, dotée de deux rails (2) parallèles l'un à l'autre s'étendant dans la direction longitudinale du véhicule et à distance l'un de l'autre, et disposés sur des supports avec un conteneur (3) qui peut être déplacé le long de la voie formée par les rails, un secteur de l'espace entre les supports, qui présente environ la longueur du conteneur, étant ouvert vers le haut après le déplacement du conteneur (3) et pouvant être utilisé comme espace de rangement (10), les rails (2) présentant une longueur telle qu'ils soient aptes à accueillir au moins un autre conteneur (3), au moins deux conteneurs (3) pouvant être déplacés indépendamment l'un de l'autre le long de la voie formée par les rails, l'espace qui se trouve entre les supports pouvant être utilisé comme espace de rangement (10) sur toute la course prévue pour les conteneurs (3), cet espace étant accessible en secteurs depuis le dessus en fonction de la position respective des conteneurs (3) sur la voie formée par les rails, **caractérisée en ce que** les supports se composent de plusieurs traverses (5) en forme de M s'étendant perpendiculairement à la voie formée par les rails et dotés chacun de deux appuis supérieurs (6) sur lesquels les rails (2, 7) sont fixés en appui.

2. Console centrale selon la revendication 1, **caractérisée en ce que** le fond d'un conteneur (3) guidé par les rails (2) se trouve en dessous des rails (2), et **en ce que** l'espace de rangement (10) est ainsi en partie occupé par le conteneur (3).

3. Console centrale selon la revendication 1 **caractérisée en ce que** le fond d'un conteneur (3) guidé par les rails (2) se trouve à la hauteur des rails (2) et **en ce que** l'espace (10) utilisable qui se trouve sous le conteneur (3) sert de rangement.

4. Console centrale selon l'une des revendications précédentes, **caractérisée en ce que** des canaux de conduite d'air (8) sont disposés en dessous des rails (2).

5. Console centrale selon l'une des revendications précédentes, **caractérisée en ce que** les supports sont fixés sur le côté supérieur de la tôle de fond formant le tunnel central (1) du véhicule.

6. Console centrale selon l'une des revendications précédentes, **caractérisée en ce qu'**elle est prévue pour un véhicule dont l'habitacle est doté de deux rangées de sièges, la console s'étendant à travers l'habitacle et passant entre les sièges des deux rangées.
